# EUROPEAN PATENT APPLICATION

(11) **EP 2 523 202 A1**
(43) Date of publication of application: **14.11.2012**
(21) Application number: 11382148.2
(22) Date of filing: 13.05.2011
(51) Int. Cl.: H01G 9/00, H01G 9/058, H01G 9/155, H01G 9/02

(54) **Electrical double - layer capacitor, and method for manufacturing such a capacitor**

(71) Applicant: Eika, S.Coop, 48277 Etxebarria (ES)
(72) Inventor: Belyakov, Alexey I., 305004 Kursk (RU); Khodyrevskaya, Nelya V., 305016 Kursk (RU); Alekhin, Viktor G., 305016 Kursk (RU); Zvyagintsev, Michail S., 305048 Kursk (RU); de los Toyos López, Daniel, 20600 Eibar (Gipuzkoa) (ES); López Berriozabalgoitia, Enaitz, 48340 Amorebieta (Bizkaia) (ES); Azpiritxaga Zalbide, Jon Endika, 48200 Durango (ES)
(74) Representative: Igartua, Ismael

(57) **Abstract**

Electrical double - layer capacitor comprising a body (1) with a plurality of elements therein, said elements comprising two current lead-outs (2) sticking out of said body (1), and at least one separator (3) and one active mass layer (4) associated to each current lead-out (2). The capacitor (100) also comprises a plurality of separated electrodes (5) formed by a separator (3) and a corresponding active mass layer (4), and at least one cell (6) formed by two separated electrodes (5), an active mass layer (4) being disposed on a separator (3), said separator (3) and said active mass layer (4) having the same length but a different width, and said active mass layer (4) being disposed on the separator (3) longitudinally centered, and the cell (6) being formed facing the separators (3) of its two separated electrodes (5) shifted 90^{Q} one respect the other one.

## Description

### TECHNICAL FIELD

The present invention relates to high-capacity electric capacitors for storing electric energy, and more particularly to an electrical double - layer capacitor. The invention also relates to a method for manufacturing such a capacitor.

### STATE OF THE ART

Known in the art is a design of a capacitor with a double electric layer, comprising a bank of storage sections arranged one on the other, connected in series and provided with insulators and current lead-outs, each section having two electrodes impregnated with an electrolyte, said electrodes containing activated carbon particles (active mass layer) and being separated each other by at least one electron-insulating porous separator. Said electrodes are generally made paste-like from a mixture of activated carbon particles and the electrolyte, the electron-insulating ion-conducting separator contacting the electrodes. The electrodes have a consistency of a viscous paste and consist of activated carbon particles, mixed with the electrolyte. The separator is generally made from a highly porous material in the form of an ion-exchange membrane, and is impregnated with the electrolyte.

Each storage section has two electron-conducting plates inert to the electrolyte, encompassing the electrodes. Each plate contacts the surface of the corresponding electrode, it functions as a current collector, and separates neighboring storage sections with respect to the electrolyte. The plates are connected with the separator over the periphery of the storage section with the help of a sealing layer made as a flexible gasket whose main function is to retain the paste-like electrolyte and preclude its spreading beyond the section when mounting in a compressed state in the capacitor body.

In the document US 6594138 B1 it is disclosed a high-capacity capacitor comprising a body with a plurality of elements therein, said elements comprising at least two current lead-outs of different polarities, and at least one separator and one active mass layer associated to each current lead-out. The active mass layer is pasted to a corresponding collector, the separator being connected to the active mass layer once said active mass layer has been pasted to the collector, the separator and the active mass layer being manufactured independently and connected or associated once said active mass layer is associated with it's corresponding collector, which may imply a loss in the active mass layer when associating with the separator, and consequently, in an economical loss.

### BRIEF DISCLOSURE OF THE INVENTION

One object of the present invention is to provide an electrical double - layer capacitor as described in the claims.

The electrical double - layer capacitor of the invention comprises a body with a plurality of elements therein, said elements comprising two current lead-outs sticking out of said body, and at least one separator and one active mass layer associated to each current lead-out. The capacitor also comprises a plurality of separated electrodes formed by a separator and a corresponding active mass layer, and at least one cell formed by two separated electrodes.

An active mass layer is disposed on one face of a corresponding separator, said separator and said active mass layer having the same length but a different width, and said active mass layer being disposed on the separator longitudinally centered, the separator of a separated electrode being disposed on the separator of another separated electrode shifted substantially 90° with respect to a perpendicular axis, the cell comprising two separated electrodes one shifted substantially 90° with respect to the other one.

Thus, as a separator and its corresponding active mass layer are handled connected each other as a separated electrode , without the need of any additional element, said separated electrodes can be manipulated easily improving the flexibility of the capacitor which implies benefits when manufacturing the capacitor, the design of said capacitor being improved in a simple manner.

Another object of the present invention is to provide a method for manufacturing an electrical double - layer capacitor, as described in the claims.

With the method of the invention a capacitor comprising a body with a plurality of elements therein is formed, said elements comprising two current lead-outs sticking out of said body, and at least one separator and one active mass layer associated to each current lead-out.

The method comprises a step wherein an active mass layer is applied or pasted continuously on one face of a porous ribbon, a step wherein, after the active mass layer is applied, the porous ribbon comprising said active mass layer thereon is cut in different portions containing a predetermined length, each portion corresponding to a separated electrode and the porous ribbon of each separated electrode corresponding with a separator, and a step wherein two separated electrodes are associated to each other facing the separators shifted 90^{Q} one respect the other one, forming a cell.

Thus, with the method of the invention separated electrodes comprising a separator and an active mass layer are easily manufactured, also joining separated electrodes for forming cells, it being possible to manufacture capacitors in series easily, which implies an increase in the efficiency of the manufacture of said capacitors apart from facilitating said manufacture, the costs being reduced and the profitability obtained from said capacitors being increased.

These and other advantages and characteristics of the invention will be made evident in the light of the drawings and the detailed description thereof.

### DESCRIPTION OF THE DRAWINGS

FIG. 1 shows an embodiment of the capacitor of the invention.
FIG. 2 shows schematically a separated electrode of the capacitor of FIG. 1.
FIG. 3a shows schematically two separated electrodes of the capacitor of FIG. 1, to be associated.
FIG. 3b shows schematically a cell of the capacitor of FIG. 1 formed by the two separated electrodes of FIG. 3a, without electron conductive layers.
FIG. 4a shows schematically a configuration of the capacitor of FIG. 1 comprising a cell.
FIG. 4b shows schematically a configuration of the capacitor of FIG. 1, comprising a plurality of cells connected in series, each pair of cells forming a block.
FIG. 4c shows schematically a configuration of the capacitor of FIG. 1, comprising a module formed by a plurality of blocks.
FIG. 5 shows schematically a separator of the capacitor of FIG. 1.
Fig. 6 shows a partial view of a wire which forms part of a mesh of the separator of FIG. 5.
Fig. 7 shows a lateral view of a separator of the capacitor of FIG. 1, where the mesh is also shown.

### DETAILED DISCLOSURE OF THE INVENTION

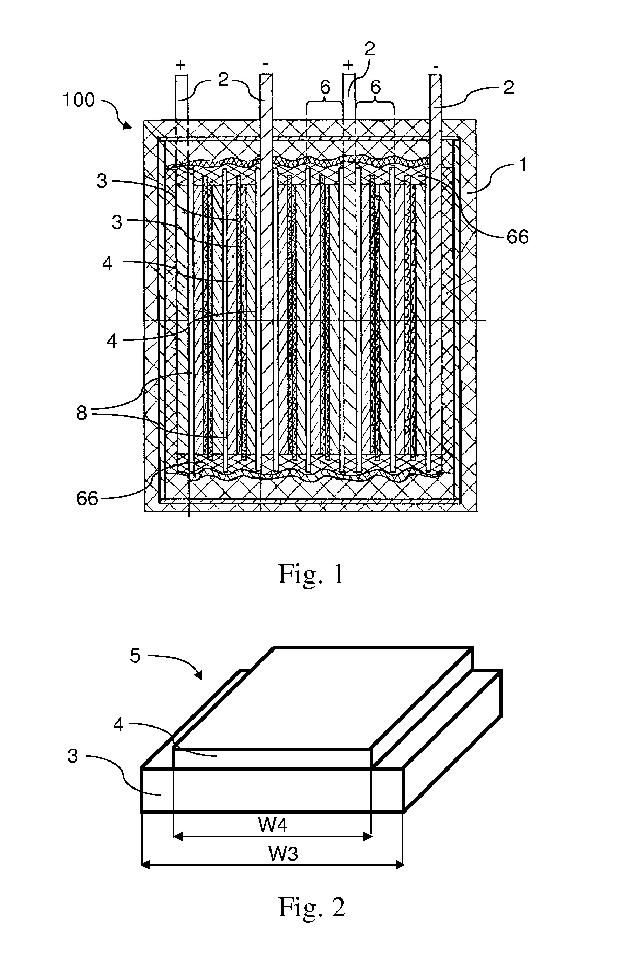

An embodiment of the electrical double - layer capacitor 100 of the invention is shown in Figure 1. Said capacitor 100 comprises a body 1 with a plurality of elements therein, said elements comprising a plurality of terminals or current lead-outs 2 sticking out of said body 1, and at least one separator 3 and one active mass layer 4 associated to each current lead-out 2. The capacitor 100 comprises a plurality of separated electrodes 5 formed by a separator 3 and a corresponding active mass layer 4, and at least one cell 6 formed by two separated electrodes 5, as it will be explained later. The active mass layer 4 comprises, preferably, carbon particles impregnated with an electrolyte, and is also known as electrode.

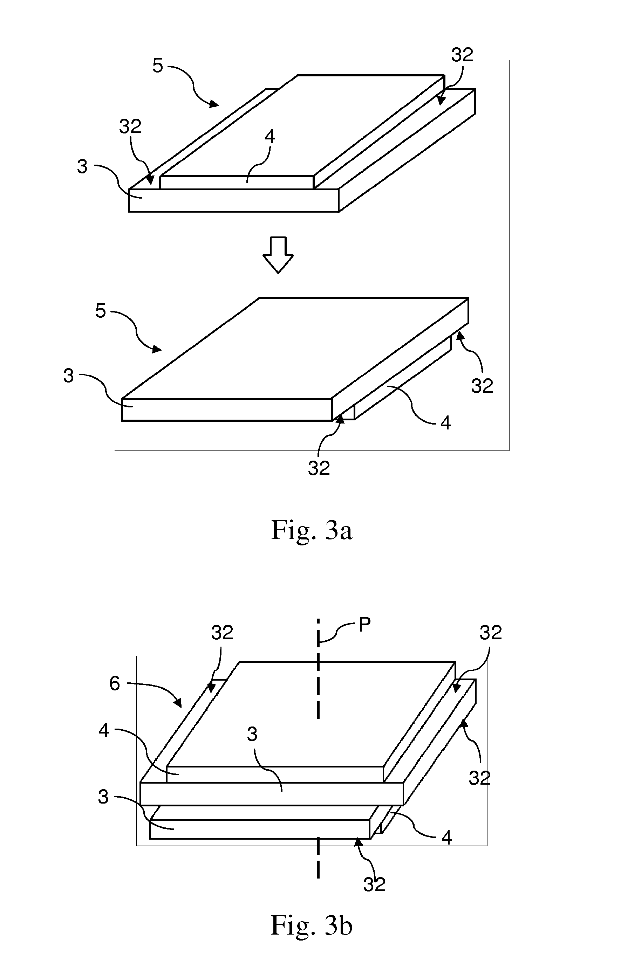

As can be seen in Figure 2, an active mass layer 4 is disposed on one face of a corresponding separator 3 a separated electrode 5 being formed, said separator 3 and said active mass layer 4 having the same length but a different width as it will be explained later with more details, and said active mass layer 4 being disposed on the separator 3 longitudinally centered. The separator 3 of a separated electrode 5 is disposed on the separator 3 of another separated electrode 5 shifted substantially 90° with respect to a perpendicular axis P, a cell 6 comprising two separated electrodes 5, one shifted substantially 90° with respect to the other one, as it is shown in Figures 3a and 3b. Therefore, in a cell 6 the two active mass layers 4 are insulated each other by means of the corresponding separators 3, said active mass layers 4 acting as electrodes of different polarities. The separators 3 are not electrically conductive, and as different separated electrodes 5 are associated with the separators 3, a short-circuit between said different separated electrodes 5 is avoided. Thanks to the fact that the separated electrodes 5 are shifted 90° one respect to other, if some of the active mass of an active mass layer 4 falls down, it falls on a free surface 32 of the separator 3, the risk of a short-circuit between said different separated electrodes 5 being reduced.

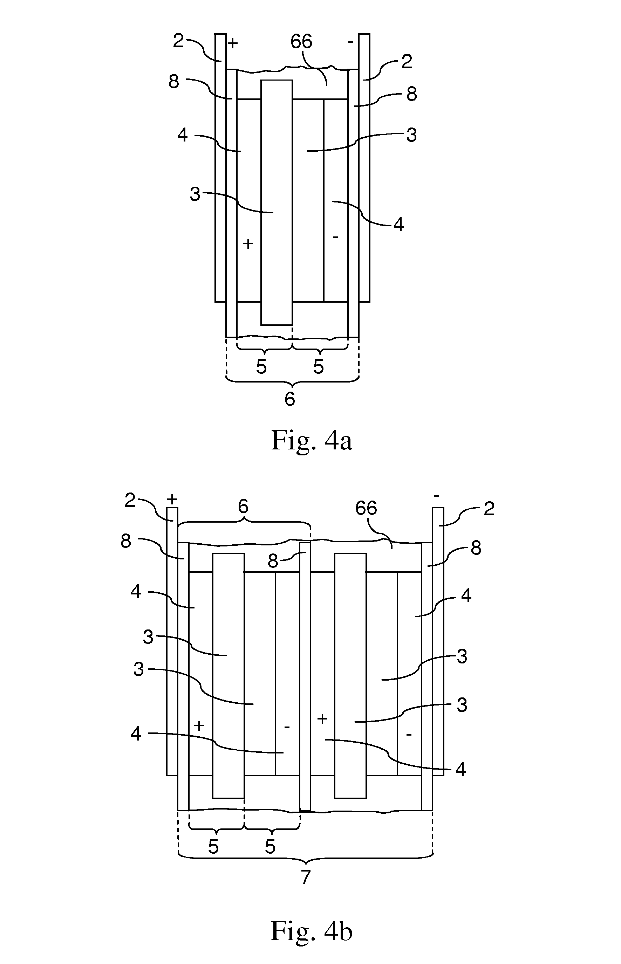

The capacitor 100 according to the invention can comprise different configurations. A first configuration is shown in Figure 4a as an example, wherein the capacitor 100 comprises an unique cell 6 comprising two separated electrodes 5 of different polarities, both separators 3 of said separated electrodes 5 being faced each other and being disposed, then, between both corresponding active mass layers 4 of different polarities, and a current lead-out 2 associated to each of the separated electrodes 5, an electron conductive layer 8 being disposed between a current lead-out 2 and the corresponding active mass layer 4 of the corresponding separated electrode 5. Said electron conductive layers 8 can be part of the cell 6. In order to increase the capacity of the capacitor 100, a capacitor 100 with more than one cell 6 can be also obtained.

A second configuration of the capacitor 100 is shown in Figure 4b as an example, wherein said capacitor 100 comprises two cells 6 connected in series, an electron conductive layer 8 being disposed between them, and, then, a block 7 being formed. the electron conductive layer 8 is, preferably, made of plastic. A current lead-out 2 is associated to each side of the block 7, and an electron conductive layer 8 is disposed between each current lead-out 2 and its corresponding side of the block 7 (an active mass layer 4 of the block 7), as it is shown in said Figure 4b, said electron conductive layers 8 being also part of the block 7. The electron conductive layer 8 of the block 7 disposed between the cells 6 is disposed between two active mass layers 4 of different polarities, each current lead-out 2 corresponding to a different polarity.

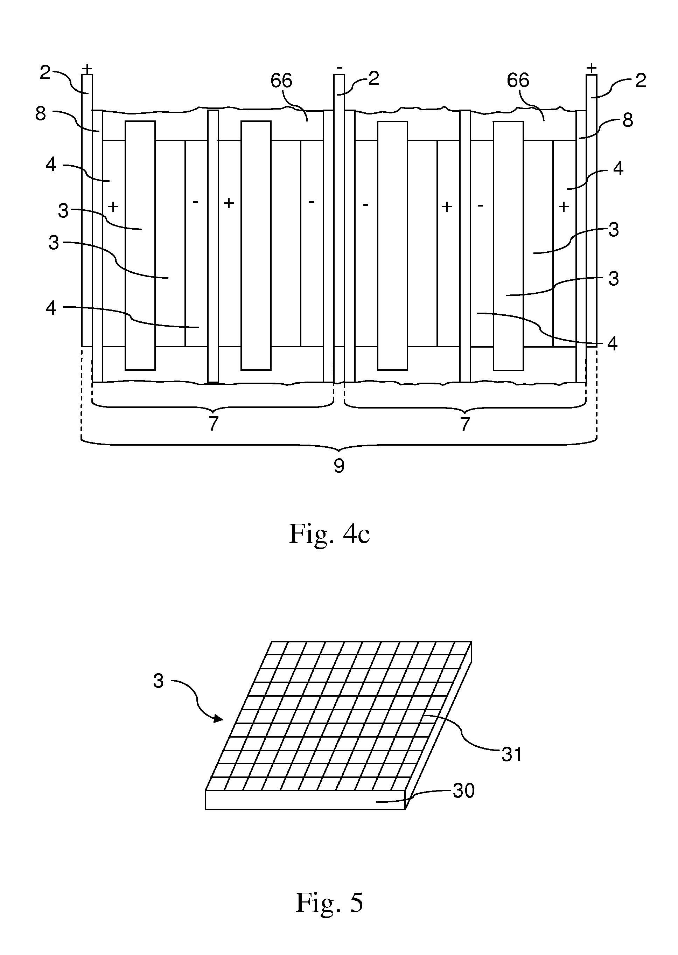

A third configuration of the capacitor 100 is shown in Figure 4c as an example, wherein said capacitor 100 comprises at least two blocks 7 connected in series, and a current lead-out 2 disposed between both blocks 7, a module 9 being so formed. The module 9 also comprises a current lead-out 2 in each of its sides, an electron conductive layer 8 being disposed between each current lead-out 2 and its corresponding active mass layer 4. Other configurations for the capacitor 100 of the invention are also possible, comprising more modules 9 connected each other for example.

In any of the explained configurations of the capacitor 100, the electron conductive layer 8 can comprise a wall (not shown in Figures) in each of its end, said walls extending towards the separator 3 of one of the cells 6, so that the corresponding active mass layer 4 is delimited at its edges by said walls. The electron conductive layer 8 can also comprise four walls, two in each of its ends, one wall of one end extending towards the nearest separator 3 of a cell 6 and the other wall extending towards the nearest separator 3 of the other cell 6.

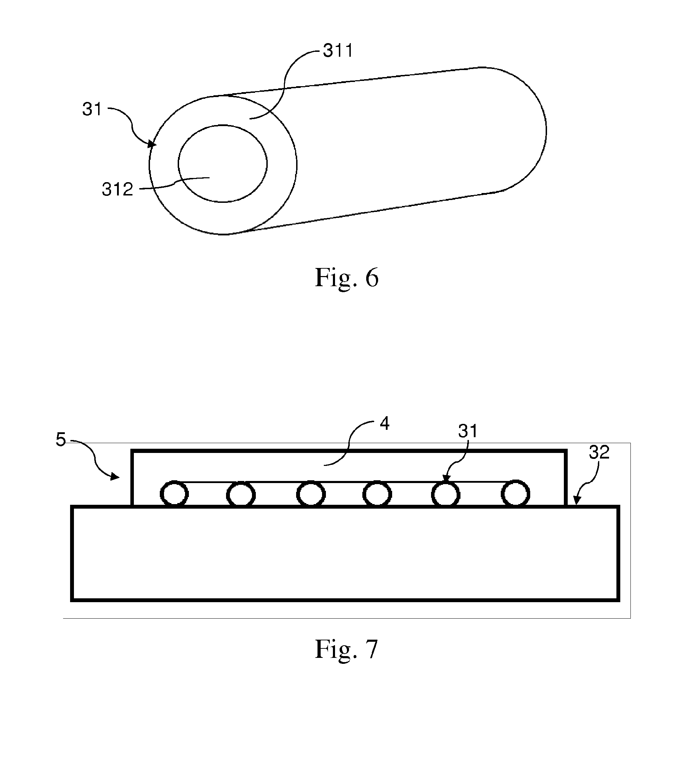

In a preferred embodiment the separator 3 comprises a porous material layer 30, preferably fiber paper impregnated with an ion-conduction polymer which is preferably polyvinyl alcohol, and a mesh 31 disposed on the porous material layer 30 as it is shown in Figure 5 schematically, the mesh 31 being formed of wires or ribbons extending in two transversal directions forming a grid. With reference to Figure 6, where part of a wire of the mesh 31 is shown, the wires of the mesh 31 of the preferred embodiment comprise two layers and are tubular shaped, comprising an outer layer 311 to provide a rigid adherence between the porous material layer 30 and the active mass layer 4, and a inner layer 312 to provide rigidity to the separator 3, the mesh 31 being disposed inside the active mass layer 4 as it is shown in Figure 7. The outer layer 311 comprises an adhesive polymer, preferably polyvinyl chloride but that can also be polyvinylchloride resin or acrylic polyvinyl acetate emulsion for example, and it is in contact with the porous material layer 30. The inner layer 312 comprises a solid polymer, preferably composed of carbon particles and/or fiberglass particles.

The width W3 of the separator 3 is bigger than the width W4 of the active mass layer 4, preferably in a proportion of approximately 1: 1,01 - 1,04, and the active mass layer 4 is disposed in a center way with respect to the separator 3, as it is shown in Figure 2 for example. If the proportion is bigger than 1,04, then the separator 3 edges can protrude the electron conductive layers 8 which would make the sealing of the cells 6 worse. If the proportion is smaller than 1,01, then an electrical short-circuit between adjacent electron conductive layers 8 is possible. As an example, the active mass layer 4 can have a width between 0,4 µm and 0,6 µm.

A method for manufacturing the electrical double - layer capacitor is now explained, with which a body 1 with a plurality of elements therein is formed, said body 1 and said elements corresponding to a capacitor 100 of the type referred above. Said elements comprise at least two current lead-outs 2 sticking out of said body 1, and at least one separator 3 and one active mass layer 4 associated to each current lead-out 2.

The method comprises a step wherein the active mass layer 4 is applied continuously on one face of a porous ribbon, and a step wherein, after the active mass layer 4 is applied on the porous ribbon, said porous ribbon comprising said active mass layer 4 thereon is cut in different portions of a predetermined length, each portion corresponding to a separated electrode 5 and the porous ribbon of each separated electrode 5 or portion corresponding to the separator 3 of said separated electrode 5. The active mass layer 4 is not applied on all the width of the porous ribbon, and is applied on said porous ribbon longitudinally centered.

The method also comprises a step wherein a cell 6 is manufactured with two separated electrodes 5 formed previously, the separators 3 of both separated electrodes 5 being faced each other shifted 90° with respect to the perpendicular axis P. Preferably, the active mass layer 4 comprised in each separated electrode 5 is square shaped, and as the width W3 of the separator 3 is bigger than the width W4 of the active mass layer 4, and active mass layer 4 cannot protrude its corresponding separator 3, a short-circuit between active mass layers 4 of different polarities being difficult to occur and all the active mass layer 4 being used for its intended use, the efficiency of the capacitor 100 being increased.

As the active mass layer 4 is applied continuously, said application can be controlled easily, controlling the thickness and the quantity of active mass layer 4 to be applied for example, which result in shaving said material and, therefore, in a reduction of costs. Apart from that, the cut of the porous ribbon and the association of different separated electrodes 5 can also be made in an easy way and in a precise manner. Thus, the capacitors 100 can be produced in a production line in an easy way, which facilitates the mass production of said capacitors 100, and hence, the profitability of said capacitors 100 being also increased.

If a capacitor 100 is going to comprise more than one cell 6, the method also comprises a step wherein a plurality of cells 6 are connected to each other in series easily, two adjacent cells 6 being connected each other by means of an electron conductive layer 8, as it is shown in the configuration of Figure 4b for example. An electron conductive layer 8 is disposed on one active mass layer 4 of a cell 6, and one active mass layer 4 of a cell 6 to be associated to the first cell 6 is disposed on said electron conductive layer 8, both cells 6 being so connected in series. Once the required cells 6 have been connected in series forming a group, in a configuration a current lead-out 2 can be associated to each of the two external cells 6, preferably by means of an electron conductive layer 8. An electron conductive layer 8 is disposed on one active mass layer 4 of an external cell 6, and a current lead-out 2 is disposed on said electron conductive layer 8. Finally, said elements are encapsulated in a body 1, said body 1 cooperating to maintain the separated electrodes 5 and the cells 6 in its corresponding position. How the encapsulation is made is not explained since it is not an object of the invention, and can be done in a known way, either the additional elements that could take part in said encapsulation. Before the encapsulation is made the cells 6 can also be secured by means of an epoxy 66 applied in the sides of said cells 6, which serves also to avoid the active mass layer 4 to fall down through said sides.

The porous ribbon comprises a porous material layer 30, preferably fiber paper impregnated with an ion-conduction polymer as has been indicated before, and a mesh 31 disposed on said porous material layer 30, said mesh 31 being inside the active mass layer 4 when said active mass layer 4 is applied. The impregnation of ion-conducting polymer and the deposition of the mesh 31 on the porous material layer 30 are made before applying the active mass layer 4. Preferably, the impregnation is carried on in a first step followed by the deposition of the mesh 31, the porous ribbon being so produced.

## Claims

1. Electrical double - layer capacitor comprising a body (1) with a plurality of elements therein, said elements comprising at least two current lead-outs (2) sticking out of said body (1) for different polarities, and at least one separator (3) and one active mass layer (4) associated to each current lead-out (2),
**characterized in that**
the capacitor (100) comprises a plurality of separated electrodes (5) formed by a separator (3) and a corresponding active mass layer (4), and at least one cell (6) formed by two separated electrodes (5),
an active mass layer (4) being disposed on one face of a corresponding separator (3), said separator (3) and said active mass layer (4) having the same length but a different width, and said active mass layer (4) being disposed on the separator (3) longitudinally centered, and
the separator (3) of a separated electrode (5) being disposed on the separator (3) of another separated electrode (5) shifted substantially 90^{Q} with respect to a perpendicular axis (P), the cell (6) comprising two separated electrodes (5), one shifted substantially 90^{Q} with respect to the other one.

2. Electrical double - layer capacitor according to claim 1, comprising a plurality of cells (6) connected in series, two adjacent cells (6) being connected to each other by means of an electron conductive layer (8) disposed between them, a current lead-out (2) being associated to each of the two external cells (6).

3. Electrical double - layer capacitor according to claim 2, wherein the current lead-out (2) is associated to the corresponding cell (6) by means of an electron conductive layer (8) disposed between said cell (6) and said current lead-out (2).

4. Electrical double - layer capacitor according to any of claims 1 to 3, wherein the separator (3) comprises a porous material (30) impregnated with an ion-conduction polymer such as polyvinyl alcohol.

5. Electrical double - layer capacitor according to claim 4, wherein the porous material (30) comprises fiber paper.

6. Electrical double - layer capacitor according to claims 4 or 5, wherein the separator (3) comprises a mesh (31) disposed on the porous material (30), connected to said porous material (30).

7. Electrical double - layer capacitor according to claim 6, wherein the mesh (31) is a double - layer mesh comprising an outer layer (311) to provide a rigid adherence between the porous material (30) and the active mass layer (4), and an inner layer (312) to provide rigidity to the separator (3).

8. Electrical double - layer capacitor according to claim 7, wherein the outer layer (311) of the mesh (31) is in contact with the porous material (30) and with the active mass layer (4).

9. Electrical double - layer capacitor according to claims 7 or 8, wherein the outer layer (311) of the mesh (31) comprises an adhesive polymer, preferably polyvinyl chloride.

10. Electrical double - layer capacitor according to any of claims 7 to 9, wherein the inner layer (312) of the mesh (31) comprises a solid polymer, preferably carbon particles and/or fiberglass particles.

11. Electrical double - layer capacitor according to any of claims 1 to 10, wherein the width (W3) of the separator (3) is bigger than the width (W4) of the active mass layer (4), preferably in a proportion of approximately 1: 1,01 - 1,04.

12. Method for manufacturing an electrical double - layer capacitor, where a body (1) with a plurality of elements therein is formed, said body (1) and said elements corresponding to a capacitor (100) and said elements comprising at least two current lead-outs (2) sticking out of said body (1) for different polarities and at least one separator (3) and one active mass layer (4) associated to each current lead-out (2), **characterized in that** the method comprises
a step wherein the active mass layer (4) is applied continuously on one face of a porous ribbon,
a step wherein, after the active mass layer (4) is applied, the porous ribbon comprising said active mass layer (4) thereon is cut in different portions containing a predetermined length, each portion corresponding to a separated electrode (5) and the porous ribbon of each separated electrode (5) corresponding with a separator (3), and
a step wherein two separated electrodes (5) are associated to each other facing the separators (3) shifted 90^{Q} one with respect to the other one, forming a cell (6).

13. Method according to claim 12, comprising a step wherein a plurality of cells (6) are connected to each other in series, two adjacent cells (6) being connected to each other by means of an electron conductive layer (8) disposed between said cells (6), a current lead-out (2) being associated to each of the two external cells (6).

14. Method according to claims 12 or 13, wherein the porous ribbon comprises a porous material layer (30), the method comprising a step wherein said porous material layer (30) is impregnated with an ion-conduction polymer before the active mass layer (4) is applied on said porous ribbon.

15. Method according to claim 14, wherein the porous ribbon comprises a mesh (31), the mesh (31) being connected to the porous material layer (30) before the active mass layer (4) is applied and after the ion-conducting polymer is applied.
